Europäisches Patentamt

European Patent Office

Office européen des brevets

(11) Publication number: **0 310 261**
**A1**

## (12) EUROPEAN PATENT APPLICATION

(21) Application number: 88308482.4

(22) Date of filing: 14.09.88

(51) Int. Cl.⁴: **B60R 1/08**

(30) Priority: 30.09.87 GB 8723010

(43) Date of publication of application:
05.04.89 Bulletin 89/14

(84) Designated Contracting States:
**DE ES FR GB**

(71) Applicant: **BRITAX WINGARD LIMITED**
**Kingsham Road**
**Chichester, West Sussex P019 2AQ(GB)**

(72) Inventor: **Bottrill, John**
**"Moelfre" 9 Langdale Avenue**
**Chichester West Sussex(GB)**

(74) Representative: **Hollinghurst, Antony**
**Britax Limited Patent Department**
**Chichester West Sussex PO19 2AQ(GB)**

(54) Exterior rear-view mirror assembly for a vehicle.

(57) An exterior rear-view mirror assembly for a ve-
hicle has a housing (10) arranged to be mounted at
a predetermined orientation on a vehicle body and a
mirror (30) mounted in the housing (10) on means
(28) permitting its orientation to be adjusted relative
to the housing (10). A second mirror (36), which is
convex and of smaller radius of curvature than the
first mirror (30), is mounted in the housing (10) either
above or below the first mirror (30) so that no part
thereof is further from the vehicle than the outboard
edge of the first mirror (30).

Fig.2

EP 0 310 261 A1

## EXTERIOR REAR-VIEW MIRROR ASSEMBLY FOR A VEHICLE

This invention relates to an exterior rear-view mirror assembly for a vehicle of the type in which a housing is arranged to be mounted at a predetermined orientation on a vehicle body and a mirror is mounted in the housing on means permitting its orientation to be adjusted relative to the housing.

The mirrors of such mirror assemblies are commonly either plane mirrors or convex mirrors having a relatively large radius of curvature. Consequently. although a driver using such a mirror is able to form a relatively accurate impression of the distance between his vehicle and a following vehicle, it is probable that such a mirror will leave a so-called "blind spot" in which another vehicle passing the vehicle to which the mirror is fitted moves out of the driver's field of view in the mirror before it enters the periphery of the driver's field of view by direct vision. The present invention aims to provide a mirror assembly which is not subject to this disadvantage.

According to the invention, a mirror assembly of the foregoing type has a second convex mirror of smaller radius of curvature than the first mirror mounted in the housing either above or below the first mirror so that no part thereof is further from the vehicle than the outboard edge of the first mirror.

An embodiment of the invention will now be described, by way of example, with reference to the accompanying drawings, in which:

Figure 1 is an elevational view of a rear view mirror in accordance with the invention from the side from which the mirror is viewed;

Figure 2 is a cross-sectional view taken on the line 2-2 in Figure 1;

Figure 3 is a partially broken away plan view of the mirror shown inFigure 2.

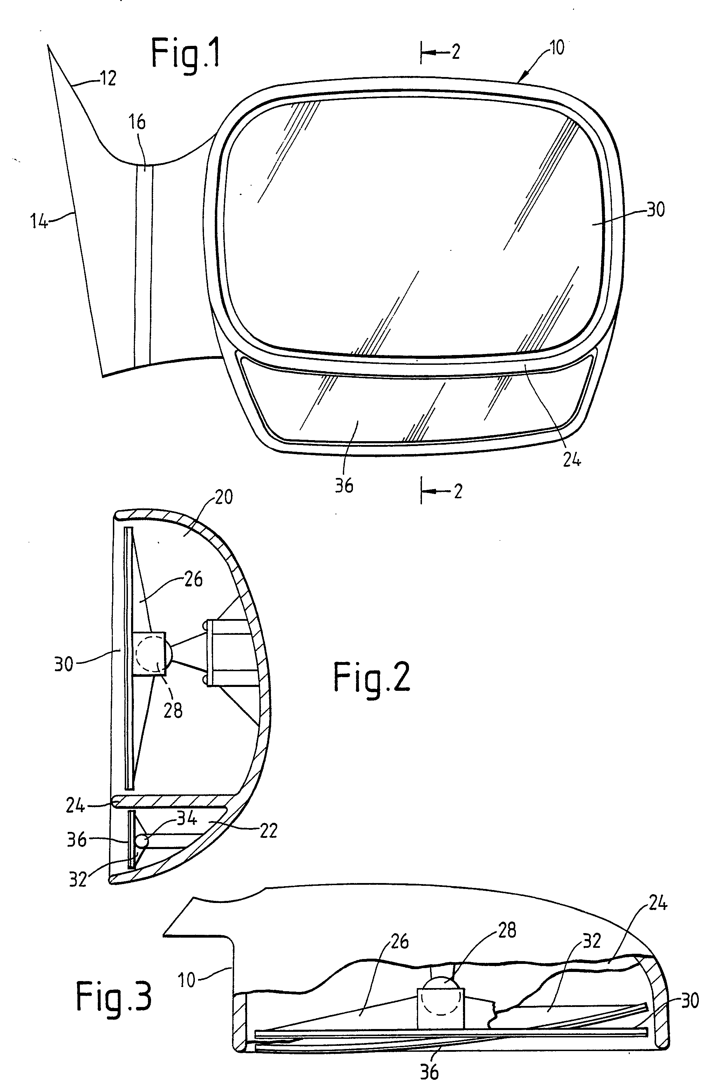

Referring to Figure 1, a rear view mirror assembly comprises a housing 10 mounted at one side on a base member 12, the surface 14 of which is adapted to abut against and be secured to the body of a motor vehicle (not shown). The connection between the housing 10 and the base member 12 comprises mechanism allowing the housing 10 to be displaced forwardly or rearwardly in the event that the housing is subjected to impact. This mechanism which, in Figure 1 is covered by a sleeve 16 of flexible material, is of known type and will therefore not be described in detail.

As can be seen from Figures 1 and 2, the housing 10 comprises an upper chamber 20 and a lower chamber 22 which are separated by a partition wall 24. A first mirror carrier 26 is mounted on a ball-and-socket joint 28 which is secured to the interior of the chamber 20. A plane mirror 30 is mounted on the mirror carrier 26.

Similarly, a mirror carrier 32 is mounted on a ball-and-socket joint 34 which is secured to the interior of the lower chamber 22. The mirror carrier 32 carries a convex mirror 36. The relative curvatures of the mirrors 30 and 36 can best be seen from Figure 3.

As is well known, it will be necessary for different drivers to adjust the orientation of the plane mirror 30 to suit their requirements. If desired, mechanism of known type may be provided for making this adjustment remotely from the interior of the vehicle. It will usually be unnecessary for the orientation of the convex mirror 36 to be altered, only two settings being necessary depending on whether the vehicle with which it is to be used has left hand drive or right hand drive. Consequently, the ball-and-socket joint 34 may be replaced by a mounting which can be set to either of two predetermined positions at the time when the mirror is fitted to a vehicle.

## Claims

1. An exterior rear-view mirror assembly for a vehicle having a housing (10) arranged to be mounted at a predetermined orientation on a vehicle body and a mirror (30) mounted in the housing (10) on means (28) permitting its orientation to be adjusted relative to the housing (10), characterised by a second mirror (36) which is convex and of smaller radius of curvature than the first mirror (30) mounted in the housing (10) either above or below the first mirror (30) so that no part thereof is further from the vehicle than the outboard edge of the first mirror (30).

2. An exterior rear-view mirror assembly according to claim 1, wherein the second mirror (36) is mounted on means (34) permitting its orientation to be adjusted relative to the housing (10).

Fig.1

12

16

14

2

10

30

2

24

36

20

26

30

28

Fig.2

24

34

22

36

32

26

28

24

32

10

Fig.3

30

36

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-2 537 876 (REITTER & SCHEFENACKER KG)<br>* Claim 1; figures 1,2 *<br>--- | 1,2 | B 60 R 1/08 |
| X | US-A-3 408 136 (TRAVIS)<br>* Page 1, lines 20-29; figures 1-4 *<br>--- | 1 | |
| X | US-A-3 175 463 (SEASHORE)<br>* Column 1, line 62 - column 2, lines 1-40; figures 1-7 *<br>----- | 1 | |

TECHNICAL FIELDS SEARCHED (Int. Cl.4)

B 60 R

The present search report has been drawn up for all claims

| Place of search | Date of completion of the search | Examiner |
|---|---|---|
| THE HAGUE | 02-01-1989 | MAUSSER,T. |